# EUROPÄISCHE PATENTSCHRIFT

(11) **EP 2 772 374 B1**
(45) Veröffentlichungstag und Bekanntmachung des Hinweises auf die Patenterteilung: **06.06.2018**
(21) Anmeldenummer: 14151634.4
(22) Anmeldetag: 17.01.2014
(51) Int. Cl.: B60G 21/055, F02M 63/00

(54) **Betriebsverfahren für ein einachsiges Wankstabilisierungssystem eines zweiachsigen, zweispurigen Fahrzeugs**
Operating method for a single-axle roll stabilization system of a two-axle, two-track vehicle
Procédé de fonctionnement d'un système de stabilisation antiroulis sur un essieu pour un véhicule à deux essieux et à double écartement

(30) Priorität: 28.02.2013 DE 102013203441
(43) Veröffentlichungstag der Anmeldung: 03.09.2014
(73) Patentinhaber: Bayerische Motoren Werke Aktiengesellschaft, 80809 München (DE)
(72) Erfinder: Roemer, Lutz, 80637 Muenchen (DE); Hochgrebe, Martin, 83734 Hausham (DE); Vogl, Daniel, 85356 Freising (DE)

(56) Entgegenhaltungen:
- EP-A2- 1 564 043
- EP-A2- 1 568 521
- EP-B1- 1 912 810
- DE-A1-102012 104 556
- DE-C2- 2 630 698
- GB-A- 2 342 078
- US-A1- 2010 276 896

## Beschreibung

Die Erfindung betrifft ein Betriebsverfahren für ein einachsiges Wankstabilisierungssystem zwischen Fahrwerk und Aufbau eines zweiachsigen, zweispurigen Fahrzeugs, wobei über einen ansteuerbaren Aktuator Energie zur Abstützung eines Wankmomentes des Aufbaus in das Fahrwerk einleitbar und dieser als Elektromotor ausgebildete Aktuator nur an der Hinterachse des Fahrzeugs über einen geteilten Querstabilisator wirkend vorgesehen ist, derart dass der zwischen den Stabilisator-Hälften angeordnete Elektromotor diese gegeneinander tordieren kann und hierbei zumindest ein dem Momentenaufbau eines passiven Wankstabilisierungssystems mit einem Querstabilisator mit vergleichbarer Federrate entsprechendes Grundmoment durch Ansteuerung seitens einer elektronischen Steuereinheit erzeugt sowie in geeigneten Fahrzuständen des Fahrzeugs ein demgegenüber größeres Moment aufbringt, aufgrund dessen die Stabilisator-Hälften weiter gegeneinander tordiert werden und das Fahrverhalten des Fahrzeugs tendenziell übersteuernd wird. Dies ist soweit aus der EP 1 912 810 B1 bekannt; daneben seien als weiterer Stand der Technik die DE 26 30 698 C2, DE 10 2009 007 356 A1 und DE 10 2008 053 481 A1 genannt.

Systeme zur Regulierung des Wankverhaltens zweispuriger Kraftfahrzeuge, deren vordergründige Zielsetzung in der Reduktion des Wankwinkels und damit einhergehend einer Steigerung von Fahrsicherheit, Fahrkomfort und Agilität besteht, sind in verschiedenen Ausführungsformen bekannt. Diese lassen sich grob in passive, schaltbare, semi-aktive und aktive Wankstabilisator-Systeme unterteilen, wobei sich die vorliegende Erfindung auf die letztgenannte Gestaltung in Form eines aktiven Querstablisators bezieht. Während die durch einen passiven Querstabilisator aufgebrachten Gegenkräfte unmittelbar aus den Relativbewegungen des Aufbaus zum Rad resultieren, ermöglichen aktive Systeme das gezielte Aufbringen von Gegenmomenten. Deren Ansteuerung erfolgt beispielweise als Funktion der Querbeschleunigung und/oder des Wankwinkels des Kraftfahrzeugs. Neben einer reduzierten Wankbewegung des Fzg.-Aufbaus lässt sich bekanntlich mit einem aktiven geteilten Querstabilisator, dessen beide Hälften gegeneinander tordierbar sind, ein verbessertes Eigenlenkverhalten des Fahrzeugs durch eine fahrzustandsabhängige Verteilung der Stabilisatormomente zwischen der Vorderachse und der Hinterachse des Fahrzeugs erzielen. Dabei kann ein o.g. gewünschtes Gegenmoment hydraulisch oder elektromotorisch gestellt werden, indem die linke und rechte Stabilisatorhälfte mittels eines geeigneten Aktuators oder Motors gegeneinander verdreht werden. Ein solches elektromechanisches bzw. elektromotorisches Wankstabilisierungssystem ist bspw. in der DE 10 2008 053 481 A1 beschrieben.

In der eingangs erstgenannten EP 1 912 810 B1 ist für ein einachsiges Wankstabilsierungssystem bspw. eines Personenkraftwagens, bei welchem nur an einer der beiden Fahrzeug-Achsen mittels eines Aktuators aktiv ein Moment zwischen Fahrwerk und Aufbau eingeleitet werden kann, beschrieben, wie ein untersteuerndes oder ein übersteuerndes Fahrverhalten des Fahrzeugs erzielt werden kann und wie im Hinblick auf eine wünschenswerterweise zu erzielende Fahrstabilität dieser eine Aktuator angesteuert werden sollte. Neben der Anforderung eines stabilen Fahrverhaltens besteht nämlich auch der Wunsch nach agilem Fahrverhalten des Fahrzeugs, dem bei an der Vorderachse angetriebenen Fahrzeugen eine durch die unterschiedlichen Schräglaufwinkel der Räder an der Vorderachse und Hinterachse bedingte systemimmanente Untersteuerungs-Tendenz entgegen steht. Als Abhilfe ist in der genannten Schrift vorgeschlagen, dass vom aktiven Wankstablisierungssystem über einen an der Fzg.-Hinterachse vorgesehen Aktuator bei geringeren Fahrgeschwindigkeiten des Fahrzeugs ein größeres Moment zur Abstützung des Wankmoments bereit gestellt wird als bei höheren Fahrgeschwindigkeiten. Dieser Schrift ist weiterhin der Hinweis zu entnehmen, dass ein aktives Moment generiert werden soll, welches dem Momentenaufbau eines passiven Systems bzw. passiven Querstabilisators entspricht und welches vorliegend als Grundmoment bezeichnet wird (vgl. die im Oberbegriff des Anspruchs 1 enthaltene Definition eines "Grundmoments" als ein dem Momentenaufbau eines passiven Wankstabilisierungssystems mit einem Querstabilisator mit vergleichbarer Federrate entsprechendes Moment), wobei jedoch in dieser besagten Schrift offen gelassen ist, wie eine solche das besagte Grundmoment erzeugende Ansteuerung eines als Elektromotor ausgebildeten Aktuators erfolgen kann.

Hiermit soll nun ein weiter entwickeltes und verbessertes Betriebsverfahren nach dem Oberbegriff des Anspruchs 1 aufgezeigt werden (= Aufgabe der vorliegenden Erfindung). Die Lösung dieser Aufgabe ist dadurch gekennzeichnet, dass der Elektromotor ausschließlich in solchen Fahrzuständen, in denen ein Untersteuern des Fahrzeugs unerwünscht ist, ein das (besagte) Grundmoment überschreitendes Moment in die Stabilisator-Hälften einleitet und dass das Grundmoment solchermaßen eingestellt wird, dass mit diesem Grundmoment derjenige sog. Basiswinkel zwischen den beiden Stabilisator-Hälften aktiv gehalten wird, der sich ohne Einwirkung fahrdynamischer Kräfte auf zumindest in Fahrzeug-Querrichtung betrachtet im wesentlichen horizontalem und ebenem Untergrund einstellt, wobei dieser Basiswinkel nach Inbetriebnahme des Fahrzeugs von der (bzw. allgemein einer) elektronischen Steuereinheit in zumindest einem entsprechenden Betriebszustand ermittelt wird. Vorteilhafte Weiterbildungen sind Inhalt der Unteransprüche.

Zunächst wird vorliegend vorgeschlagen, ein höheres Moment als das besagte Grundmoment, welches dann eine Untersteuer-Tendenz des Fahrzeugs abbaut bzw. dem Fahrzeug eine Übersteuer-Tendenz aufprägt, durch den Elektromotor nur dann über den geteilten Querstabilisator einzuleiten, wenn ein entsprechender Bedarf nach einem agileren Fahrverhalten besteht, was aber nur bei einer signifikanten Kurvenfahrt des Fahrzeugs der Fall ist, nicht jedoch wenn das Fahrzeug annähernd geradlinig bewegt wird und somit allenfalls "schwache" Kurven mit großen Radien befährt. Somit sollte nicht alleine die Fahrgeschwindigkeit des Fahrzeugs ein Kriterium für die Größe des vom besagten Elektromotor zu stellenden Moments sein, sondern darüber hinaus auch der Bedarf nach mehr Agilität. In anderen Worten ausgedrückt soll der Elektromotor also nur dann ein höheres Moment als das sog. Grundmoment erzeugen, wenn ein Untersteuern des Fahrzeugs unerwünscht ist, was insbesondere dann nicht der Fall ist, wenn das Fahrzeug mit beliebiger Geschwindigkeit annähernd geradeaus fährt. Indem erfindungsgemäß der Elektromotor ausschließlich in solchen Fahrtzuständen, in denen ein Untersteuern unerwünscht ist, ein höheres Moment als das besagte Grundmoment erzeugen muss, kann dessen Energiebedarf gegenüber einer nur von der Fahrgeschwindigkeit des Fahrzeugs abhängigen Ansteuerung in nicht vernachlässigbarem Umfang reduziert werden, insbesondere wenn berücksichtigt wird, dass bei Fortbewegung des Fahrzeugs ohne signifikanten Agilitäts-Bedarf anzutreffende Fahrbahn-Unebenheiten zu einem einseitigem Einfedern der Hinterräder des Fahrzeugs und als Folge dessen zu einem gesteigerten Energiebedarf des Wankstabilisierungs-Elektromotors führen könnten.

Weiterhin wird vorliegend eine einfache Prozedur zur Darstellung des besagten Grundmoments bzw. zur Ermittlung desselben vorgeschlagen, ohne dass eine aufwändige Momenten-Messung erfolgen muss. Vielmehr wird hierfür auf den "Relativ"-Winkel zwischen den beiden Stabilisator-Hälften, die der Elektromotor mehr oder weniger gegeneinander verdrehen soll, zugegriffen, wobei derjenige Relativ-Winkel, bei welchem der aktive Querstabilisator kein Moment zwischen den beiden Fahrzeug-Seiten übertragen muss, da in diesem Fall auch ein passiver (und somit nicht geteilter) Querstabilisator kein Moment zwischen den beiden Fahrzeug-Seiten übertragen würde, vorliegend (und im weiteren) als Basiswinkel bezeichnet wird. Dieser Basiswinkel stellt sich ohne Ansteuerung des Elektromotors des geteilten Querstabilisators zwischen dessen Stabilisator-Hälften dann ein, wenn keine fahrdynamische Kräfte auf das Fahrzeug bzw. den Fahrzeug-Aufbau einwirken und sich das Fahrzeug auf einer zumindest in Fzg.-Querrichtung betrachtet im wesentlichen horizontalen und ebenen Fahrbahn bzw. auf horizontalem ebenen Untergrund befindet. Im Idealfall ist dabei das Fahrzeug auch gleichmäßig beladen oder es befindet sich sogar der Aufbau in Konstruktionslage, jedoch ist der Einfluss dieser letztgenannten Kriterien auch vernachlässigbar.

Ein erfindungsgemäßes Wankstabilisierungssystem, genauer eine diesem zugeordnete elektronische Steuereinheit erlernt somit zunächst eine sog. "Nullposition" der beiden Stabilisator-Hälften relativ zueinander, in welcher Nullposition der aktive Querstabilisator kein Moment zwischen den beiden Fahrzeug-Seiten übertragen muss, da in diesem Fall auch ein passiver (und somit nicht geteilter) Querstabilisator kein Moment zwischen den beiden Fahrzeug-Seiten übertragen würde, weil keine fahrdynamische Kräfte auf das Fahrzeug bzw. den Fahrzeug-Aufbau einwirken und sich das Fahrzeug mit in Konstruktionslage befindlichem Aufbau auf einer zumindest in Fzg.-Querrichtung betrachtet im wesentlichen horizontalen ebenen Fahrbahn bzw. auf horizontalem ebenen Untergrund befindet. Diese Nullposition ist dann durch den sog. Basiswinkel gekennzeichnet, der nicht nur ein Relativ-Winkel zwischen den gegeneinander verdrehbaren Stabilisator-Hälften ist, sondern auch eine definierte Verdrehwinkel-Position des zwischen diesen Stabilisator-Hälften vorgesehenen Elektromotors ist.

Nach Ermittlung dieses Basiswinkels kann die besagte elektronische Steuereinheit immer dann, wenn die üblicherweise untersteuernde Grundcharakteristik des Fahrzeugs unverändert beibehalten werden soll, den zwischen die Stabilisator-Hälften geschalteten Elektromotor solchermaßen ansteuern, dass diese Nullposition bzw. dieser Basiswinkel unabhängig von bei der Fahrt des Fahrzeugs auftretenden Störeinflüssen im wesentlichen beibehalten wird, was regelungstechnisch beispielsweise mit einem P-Regler stabil und einfach darstellbar ist. Damit wirkt der aktive Querstabilisator wie ein passiver Stabilisator. Lediglich dann, wenn ein Untersteuern des Fahrzeugs unerwünscht ist, wird der Elektromotor erfindungsgemäß dahingehend angesteuert, dass dieser zusätzlich zu dem die besagte Nullposition haltenden Grundmoment ein dem Grundmoment gleichgerichtetes additives Moment und somit ein betragsmäßig größeres Moment als das Grundmoment in die Stabilisator-Hälften einleitet und damit (wie bekannt) der Untersteuer-Tendenz entgegenwirkt bzw. ein übersteuerndes Fahrverhalten hervorruft.

Da mit einem Abstellen bzw. Stillsetzen des Fahrzeugs üblicherweise die Versorgung elektronischer Steuereinheiten mit elektrischer Energie soweit als möglich eingestellt wird, ist beim erfindungsgemäßen Betriebsverfahren weiterhin vorgesehen, dass der besagte Basiswinkel nach einer Inbetriebnahme des Fahrzeugs von einer bzw. der elektronischen Steuereinheit in einem entsprechenden Betriebszustand des Fahrzeugs, in dem keine fahrdynamische Kräfte auf das Fahrzeug bzw. den Fahrzeug-Aufbau einwirken und sich das Fahrzeug auf einer zumindest in Fzg.-Querrichtung betrachtet im wesentlichen horizontalen Fahrbahn bzw. auf horizontalem ebenen Untergrund befindet, neu ermittelt wird. Dass keine fahrdynamische Kräfte einwirken, ist für die elektronische Steuereinheit einfach beispielsweise dadurch feststellbar, dass das Fahrzeug stillsteht, während auf üblichen Fahrbahnen, auf denen ein Fahrzeug abgestellt oder beispielsweise vor einer "roten" Verkehrsampel, welche bspw. anhand von Navigationsdaten erkennbar ist, zum Stillstand gebracht wird, von einem in Fzg.-Querrichtung betrachtet im wesentlichen horizontalen Untergrund ausgegangen werden kann. Falls das Fahrzeug mit bekannten Höhenstandsensoren ausgerüstet ist, welche die Aufbauhöhe gegenüber zumindest zwei Rädern zu messen in der Lage sind, kann ggf. auch hieraus mit ausreichender Genauigkeit unter Vernachlässigung der Wirkung einseitiger Beladung auf einen in Fzg.-Querrichtung horizontalen Untergrund geschlossen werden. Dabei sei ausdrücklich erwähnt, dass die besagte Ermittlung des Relativwinkels der "Nullposition" nicht zwangsweise einmalig direkt im Anschluss an eine Inbetriebnahme des Fahrzeugs erfolgen muss, sondern in geeigneten Betriebszuständen auch nach einer gewissen Betriebsdauer oder mit geeigneter Berücksichtigung der relevanten Fahrzustandsinformationen auch während der Fahrt quasi fortlaufend ermittelt werden kann.

Falls im Wankstabilisierungssystem und insbesondere am Elektromotor desselben die Möglichkeit der Messung des Verdrehwinkels zwischen den Stabilisator-Hälften besteht, so ist es besonders einfach, diesen Elektromotor so anzusteuern, dass der besagte Basiswinkel und somit die besagte Nullposition eingestellt wird, woraufhin sich der erfindungsgemäß "aktiv betriebene" geteilte Querstabilisator wie ein passiver, nicht geteilter Stabilisator verhält. Jedoch besitzen die üblicherweise für ein Wankstabilisierungssystem eines Fahrzeugs zwischen geteilten Querstabilisatoren verwendeten elektrischen Stellantriebe bzw. Stellmotoren keine derartige Winkel-Mess-Sensorik, welche jederzeit den effektiven Verdrehwinkel zwischen den beiden Stabilisator-Hälften ermitteln und damit als Stellgröße zur Verfügung stellen kann. Vielmehr kann ohne solche Sensorik lediglich ein zeitlich betrachtet "relativer" Verdrehwinkel gegenüber einem Startzeitpunkt des (u.a. durch den Elektromotor gebildeten) Systems verfolgt werden, wobei im Rahmen der bzw. als Weiterbildung der vorliegenden Erfindung der genannte Startzeitpunkt beim erstmaligen oder wiederkehrenden Auftreten der besagen Nullposition gesetzt wird. Demnach lernt eine bzw. die bereits genannte elektronische Steuereinheit diese Nullposition, indem sie diese selbst ermittelt, und verfolgt ausgehend von diesem Lernprozess im regulären ungestörten Betrieb fortlaufend die vom Elektromotor durchgeführten Verdrehbewegungen zwischen den beiden Stabilisator-Hälften, um zu beliebigen Zeitpunkten die aktuelle "Relativposition" der beiden Stabilisator-Hälften zueinander zu kennen. Damit kann die elektronische Steuereinheit im Bedarfsfall stets die beiden Stabilisator-Hälften in die besagte Nullposition bringen, da lediglich um den seit dem Lernprozess fortlaufend unter Berücksichtigung des Drehsinns aufsummierten Drehwinkel-Änderungen über den ermittelten Summenwert rückgängig gemacht werden müssen, um den Basiswinkel bzw. die Nullposition zu erreichen. Erfindungsgemäß berücksichtigt die besagte elektronische Steuereinheit für die entsprechende Ansteuerung des Elektromotors neben der Fahrgeschwindigkeit des Fahrzeugs dessen Gierrate und/oder Querbeschleunigung, da mit diesen physikalischen Größen eine Kurvenfahrt des Fahrzeugs soweit ausreichend beschrieben ist, dass anhand geeigneter Vorgaben, die in der elektronischen Steuereinheit im Rahmen der Fahrzeug-Auslegung appliziert wurden, festgelegt werden kann, ob ein Untersteuern des Fahrzeugs unerwünscht ist. Beispielsweise kann ein Untersteuern dann unerwünscht sein, wenn die Fahrgeschwindigkeit unterhalb und die Querbeschleunigung und/oder die Gierrate oberhalb eines vorgegebenes Grenzwerts liegt. Bejahendenfalls wird daraufhin der Elektromotor zur Abgabe eines das Grundmoment entsprechend überschreitenden Moments angesteuert. Grundsätzlich kann jedoch auch die Längsbeschleunigung des Fahrzeugs und/oder eine beispielsweise vom Fahrer des Fahrzeugs mit seinem Gaspedal vorgegebene Wunsch-Längsbeschleunigung des Fahrzeugs entsprechend berücksichtigt werden.

Es kann die Reaktionszeit des Systems weiter herabgesetzt werden, wenn die elektronische Steuereinheit für die entsprechende Ansteuerung des Elektromotors weiterhin den vom Fahrer vorgegebenen Lenkwinkel berücksichtigt. Bereits mit Einleitung einer intensiveren Lenkbewegung durch den Fahrer bzw. einen entsprechend intensiven Lenkwunsch des Fahrers kann damit ein agileres Fahrverhalten dargestellt werden. Sollten jedoch Umwelteinflüsse ein besonders agiles Fahrverhalten als zu unsicher erscheinen lassen, was insbesondere bei Vorliegen eines geringen Reibwerts zwischen Reifen und Fahrbahn der Fall ist, so kann die elektronische Steuereinheit weiterhin diesen Reibwert, der in modernen Fahrdynamik-Regelsystemen aus anderen Prozeduren "bekannt" ist, geeignet berücksichtigen.

## Patentansprüche

1. Betriebsverfahren für ein einachsiges Wankstabilisierungssystem zwischen Fahrwerk und Aufbau eines zweiachsigen, zweispurigen Fahrzeugs, wobei über einen ansteuerbaren Aktuator Energie zur Abstützung eines Wankmomentes des Aufbaus in das Fahrwerk einleitbar und dieser als Elektromotor ausgebildete Aktuator an der Hinterachse des Fahrzeugs über einen geteilten Querstabilisator wirkend vorgesehen ist, derart dass der zwischen den Stabilisator-Hälften angeordnete Elektromotor diese gegeneinander tordieren kann und hierbei zumindest ein dem Momentenaufbau eines passiven Wankstabilisierungssystems mit einem Querstabilisator mit vergleichbarer Federrate entsprechendes Grundmoment durch Ansteuerung seitens einer elektronischen Steuereinheit erzeugt sowie in geeigneten Fahrzuständen des Fahrzeugs ein demgegenüber größeres Moment aufbringt, aufgrund dessen die Stabilisator-Hälften weiter gegeneinander tordiert werden und das Fahrverhalten des Fahrzeugs tendenziell übersteuernd wird,
**dadurch gekennzeichnet, dass** der Elektromotor lediglich in solchen Fahrzuständen, in denen ein Untersteuern des Fahrzeugs unerwünscht ist, ein das Grundmoment überschreitendes Moment in die Stabilisator-Hälften einleitet, nicht jedoch bei Antreffen von Fahrbahn-Unebenheiten, die bei einer Fortbewegung des Fahrzeugs ohne signifikanten Agilitäts-Bedarf zu einem einseitigen Einfedern der Hinterräder des Fahrzeugs führen,
und dass das Grundmoment solchermaßen eingestellt wird, dass mit diesem Grundmoment derjenige sog. Basiswinkel zwischen den beiden Stabilisator-Hälften aktiv gehalten wird, der sich ohne Einwirkung fahrdynamischer Kräfte auf zumindest in Fahrzeug-Querrichtung betrachtet im wesentlichen horizontalem und ebenem Untergrund einstellt, wobei dieser Basiswinkel nach Inbetriebnahme des Fahrzeugs von der elektronischen Steuereinheit in zumindest einem entsprechenden Betriebszustand ermittelt wird, wobei die elektronische Steuereinheit für die entsprechende Ansteuerung des Elektromotors neben der Fahrgeschwindigkeit des Fahrzeugs dessen Gierrate und/oder Querbeschleunigung berücksichtigt.

2. Betriebsverfahren nach Anspruch 1 , **dadurch gekennzeichnet, dass** die elektronische Steuereinheit für die entsprechende Ansteuerung des Elektromotors neben der Fahrgeschwindigkeit des Fahrzeugs dessen Längsbeschleunigung oder einen vorgegebenen Längsbeschleunigungs-Wunsch berücksichtigt.

3. Betriebsverfahren nach einem der vorangegangenen Ansprüche,
**dadurch gekennzeichnet, dass** die elektronische Steuereinheit für die entsprechende Ansteuerung des Elektromotors weiterhin den vom Fahrer vorgegebenen Lenkwinkel berücksichtigt.

4. Betriebsverfahren nach einem der vorangegangenen Ansprüche, **dadurch gekennzeichnet, dass** die elektronische Steuereinheit weiterhin den Reibwert zwischen Reifen und Fahrbahn berücksichtigt.

5. Betriebsverfahren nach einem der vorangegangen Ansprüche, wobei der Basiswinkel in der elektronischen Steuereinheit als Basis gesetzt wird, von welcher ausgehend fortlaufend vom Elektromotor durchgeführte Drehwinkel-Änderungen unter Berücksichtigung des Drehsinns aufsummiert werden und hieraus der nötige Verdrehwinkel des Elektromotors zur Einstellung des Basiswinkels bestimmt wird.

## Claims

1. An operating method for a single-axle roll stabilisation system between the chassis and body of a two-axle, two-track vehicle, wherein energy for supporting a roll moment of the body can be introduced into the chassis via a controllable actuator, and said actuator, formed as an electric motor, is provided in a manner acting on the rear axle of the vehicle via a divided anti-roll bar, in such a way that the electric motor arranged between the bar halves can twist said halves relative to one another and in so doing generates at least one base torque, corresponding to the torque build-up of a passive roll stabilisation system comprising an anti-roll bar with comparable spring rate, by control from an electronic control unit, and in suitable driving states of the vehicle applies a comparatively greater torque, on account of which the bar halves are twisted further relative to one another and the driving behaviour of the vehicle tends towards oversteering,
**characterised in that** the electric motor introduces a torque exceeding the base torque into the bar halves merely in driving states in which an understeering of the vehicle is undesired, and not when unevennesses in the roadway are encountered which, as the vehicle continues to travel without significant agility requirement, lead to a one-sided compression of the rear wheels of the vehicle,
and **in that** the base torque is set in such a way that what is known as the base angle between the two bar halves is held active with this base torque and adjusts itself without the action of driving dynamic forces on a substantially horizontal and flat ground surface at least as considered in the vehicle transverse direction, wherein this base angle is determined by the electronic control unit in at least one appropriate operating state once the vehicle has been started, wherein the electronic control unit, besides the travel speed of the vehicle, also takes into consideration the yaw rate and/or lateral acceleration of the vehicle for the corresponding control of the electric motor.

2. An operating method according to claim 1, **characterised in that** the electronic control unit, besides the travel speed of the vehicle, also takes into consideration the longitudinal acceleration or a predefined desired longitudinal acceleration of the vehicle for the corresponding control of the electric motor.

3. An operating method according to any one of the preceding claims,
**characterised in that** the electronic control unit also takes into consideration the steering angle predefined by the driver for the corresponding control of the electric motor.

4. An operating method according to any one of the preceding claims,
**characterised in that** the electronic control unit also takes into consideration the frictional value between tyres and roadway.

5. An operating method according to any one of the preceding claims, wherein the base angle in the electronic control unit used as the basis, starting from which rotary angle changes performed continuously by the electric motor are added up under consideration of the sense of rotation, and from which the necessary angle of rotation of the electric motor in order to set the base angle is determined.

## Revendications

1. Procédé permettant de faire fonctionner un système de stabilisation antiroulis d'un essieu monté entre le train de roulement et la caisse d'un véhicule à deux essieux et à deux lignes de roues, selon lequel un actionneur commandable, permet de transférer dans le train de roulement, l'énergie permettant de soutenir le couple de roulis de la caisse et cet actionneur, qui est réalisé sous la forme d'un moteur électrique agit sur l'essieu arrière du véhicule, par l'intermédiaire d'un stabilisateur transversal subdivisé, de sorte que, le moteur électrique qui est monté entre les deux moitiés du stabilisateur puisse exercer une torsion sur celles-ci l'une par rapport à l'autre, et produire ainsi par commande du côté d'une unité de commande électronique, au moins un couple de base correspondant à l'établissement de couple d'un système de stabilisation de roulis passif avec un stabilisateur transversal ayant un taux d'élasticité comparable et, fournisse dans des états de déplacement adaptés du véhicule plus grand un couple sur le fondement duquel les moitiés de stabilisateur sont soumises à une torsion plus importante et le comportement de déplacement du véhicule tend à survirer,
**caractérisé en ce que**
le moteur électrique ne transmet dans les moitiés du stabilisateur, un couple dépassant le couple de base que dans des situations de déplacement dans lesquelles il n'est pas souhaité que le véhicule survire, mais pas en présence de déformations de la chaussée, qui conduisent à un rabattement élastique unilatéral des roues arrières du véhicule, en présence d'une poursuite du déplacement du véhicule sans demande d'agilité significative, et
le couple de base est réglé, de sorte qu'il maintienne activement, l'angle de base entre les deux moitiés du stabilisateur qui, se règle en l'absence d'intervention de forces dynamiques de mouvement sur une surface essentiellement horizontale et plane, au moins dans la direction transversale du véhicule, cet angle de base étant détecté par l'unité de commande électronique après la mise en marche du véhicule, dans au moins un état de fonctionnement correspondant, l'unité de commande électronique prenant en considération, pour la commande correspondante du moteur électrique, outre la vitesse de déplacement du véhicule son taux de lacet et/ou son accélération transversale.

2. Procédé de fonctionnement conforme à la revendication 1,
**caractérisé en ce que**
l'unité de commande électronique prend en considération pour la commande correspondante du moteur électrique, outre la vitesse de déplacement du véhicule son accélération longitudinale, ou un souhait d'accélération longitudinale prédéfini.

3. Procédé de fonctionnement conforme à l'une des revendications précédentes,
**caractérisé en ce que**
l'unité de commande électronique prend en outre en considération pour la commande correspondante du moteur électrique, l'angle de braquage prédéfini par le conducteur.

4. Procédé de fonctionnement conforme à l'une des revendications précédentes,
**caractérisé en ce que**
l'unité de commande électronique prend en outre en considération la valeur de friction entre les pneus et la chaussée.

5. Procédé de fonctionnement conforme à l'une des revendications précédentes, selon lequel
l'angle de base est déposé dans l'unité de commande électronique en tant que base à partir de laquelle, des modifications de l'angle de rotation effectuées en continu par le moteur électrique sont additionnées en prenant en considération le sens de rotation, et à partir de là l'angle de torsion nécessaire du moteur électrique est déterminé pour régler l'angle de base.
